# EUROPEAN PATENT SPECIFICATION

(11) **EP 3 051 724 B1**
(45) Date of publication and mention of the grant of the patent: **06.04.2022**
(21) Application number: 15305138.8
(22) Date of filing: 30.01.2015
(51) Int. Cl.: H04J 14/02

(54) **AN OPTICAL NODE AND ASSOCIATED METHOD FOR SIMULTANEOUS RECEIVING OF OPTICAL SIGNALS**
EIN OPTISCHER KNOTEN UND ZUGEHÖRIGES VERFAHREN ZUM GLEICHZEITIGEN EMPFANGEN OPTISCHER SIGNALEN
UN NOEUD OPTIQUE ET PROCÉDÉ CORRESPONDANT POUR LA RÉCEPTION SIMULTANEÉ DE SIGNAUX OPTIQUES

(43) Date of publication of application: 03.08.2016
(73) Proprietor: Alcatel Lucent, 91620 Nozay (FR)
(72) Inventor: POINTURIER, Yvan, 91620 NOZAY (FR); USCUMLIC, Bogdan, 91620 NOZAY (FR)
(74) Representative: Hepworth Browne

(56) References cited:
- EP-A1- 2 838 217
- NIHEL BENZAOUI ET AL: "Electronic architectures of optical slot switching nodes", 17TH INTERNATIONAL CONFERENCE ON OPTICAL NETWORKING DESIGN AND MODELING (ONDM 2013); 16-19 APRIL 2013; BREST, FRANCE, IEEE, PISCATAWAY, NJ, USA, 16 April 2013 (2013-04-16), pages 94-99, XP032419256, ISBN: 978-1-4799-0491-4

## Description

### FIELD OF THE INVENTION

The present invention relates to optical communication network.

### BACKGROUND OF THE INVENTION

The realm of telecommunication has evolved drastically for the last decades, driven by new technologies and new habits of consumers. Communication networks have evolved to match the never ending increase of content request. Optical communication networks are key elements to sustain higher rate of content deliveries.

Metropolitan area network or datacenter can made use of optical based infrastructure, in particular when high volume of data need to transit from a node to another with low latency in a high density network. A practical scheme for interconnecting network elements is to design optical rings that benefit from advantages of the optical transport and reduces the number of required interconnections in comparison of a complex wiring in Ethernet networks.

Simple implementation of optical rings involves the reservation of optical carrier wavelengths during a given time for conveying data from an optical node belonging to the optical ring, to another optical node from said optical ring. Finer management of optical resources has led to enhanced optical rings using optical slot switching. In an optical slot switched ring, statistical multiplexing, i.-e. the possibility to share the wavelengths simultaneously by several sources and destinations enables an efficient use of the capacity while minimizing costly and energy-hungry opto-electronic processing. A problem arises in an optical ring when a receiving optical node is the termination point of several optical paths from the optical ring. In such case, the receiving optical node must be fed sequentially with optical signals conveyed through the optical paths in order to avoid collisions of optical resources. An example of wasted optical resources is typically an optical slot only partially filled in terms of wavelength usage because it comprises an optical packet addressed to a receiving optical node. Indeed if two sources optical nodes have to transmit within the same optical slot to a destination optical node, even if the source optical nodes uses two different wavelengths, one of them has to wait a free optical slot for reaching the destination optical node. This problem becomes more complex as there can be several receiving optical nodes that are the termination points of several optical paths. As collisions of optical resources are avoided, this translates into a non optimal usage of said optical resources. Subsequently overall sustainable throughput and latency on the optical ring are impacted. More particularly the insertion latency of optical signals into the optical ring network is the most impacted by the avoidance of collisions of optical resources, whereas said insertion latency has the most impact on the overall latency on the optical ring.

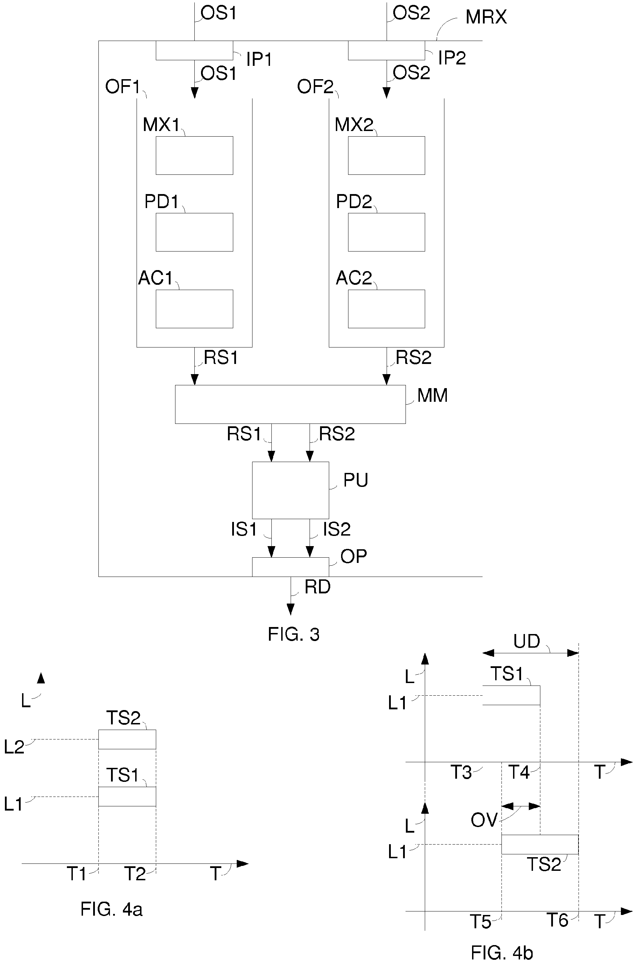

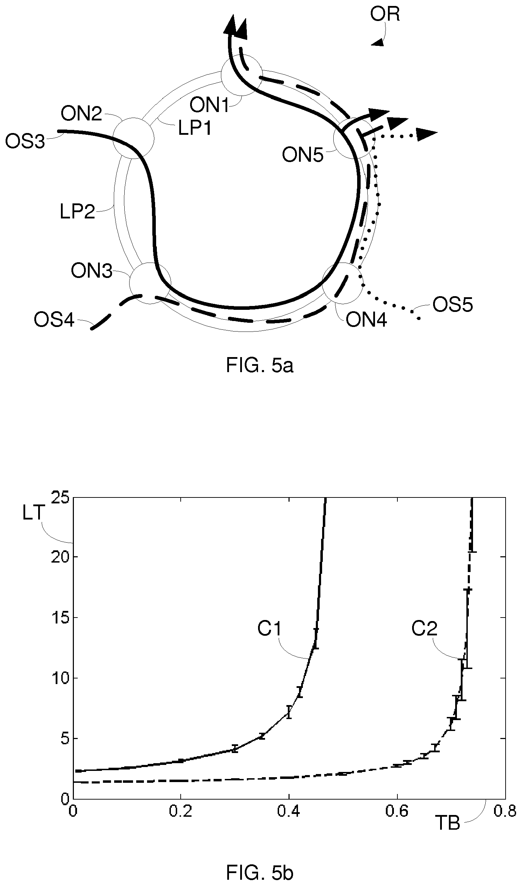

It is therefore needed to find a practical way to make better usage of the optical resources and improve latency on the optical ring. The optical nodes from the optical ring need to be more flexible in terms of optical resources allocations but there exists also strong constraints in terms of energy consumption and costs of components, for preserving capital expenditures and operational expenditures on such optical nodes. Document EP 2 838 217 A1 discloses an optical time-slotted ring network, which can be used in a metropolitan or access segment, comprises optical packet add-drop multiplexers, OPADM and a hub node connected by optical fiber. The data is transmitted within fixed-duration packet payloads over the optical links and the optical packet payloads are WDM-multiplexed over the optical links. The optical node receives simultaneously a first optical signal conveying a first set of data and a second optical signal conveying a second set of data. The splitter section 23 also comprises one or more drop outputs 27 each linked to a drop module 28 for extraction (Fig. 4, optical packet add-drop multiplexer, OPADM). D1 also provides two possible implementations for the drop modules 28 represented in Figures 5 (WDM demultiplexer, a plurality of receivers, a shift register at the outputs of the receivers and a buffer to the shift register) and Figure 13 (combination of a mixer and a coherent optical receiver).

### SUMMARY OF THE INVENTION

The invention aims to remedy all or some of the disadvantages of the above identified prior art. It particularly proposes ways for simultaneous receiving and processing of optical signals by an optical node.

A first aspect of the invention relates then to an optical node for receiving simultaneously a first optical signal conveying a first set of data and a second optical signal conveying a second set of data, the first set of data and the second set of data being respectively informative data, the optical node comprising:
- a first optical frontend for receiving the first optical signal and for converting from optical domain to electrical domain said first optical signal into a first raw electrical signal,
- a second optical frontend for receiving the second optical signal and for converting from optical domain to electrical domain said second optical signal into a second raw electrical signal,
- a storage device connected to the first optical frontend and to the second optical frontend, and being adapted to store simultaneously the first raw electrical signal and the second raw electrical signal,
- a processing device connected to the storage device, and being provided sequentially with the stored first raw electrical signal for extracting the first set of data, and with the stored second raw electrical signal for extracting the second set of data.

Thus, thanks to these features, the optical node receives simultaneously the first optical signal and the second optical signal. The first optical frontend receives and converts from the optical domain to the electrical domain the first optical signal into the first raw electrical signal. The second optical frontend receives and converts from the optical domain to the electrical domain the second optical signal into the second raw electrical signal. The first raw electrical signal and the second raw electrical signal are stored simultaneously in the storage device. The storage device is adapted for providing sequentially the first raw electrical signal and the second raw electrical signal to the processing device, which is adapted to extract the first set of data, comprised in the first optical signal, and the second set of data, comprised with the second set of data. The respective cooperations between the first optical frontend and the storage device, and between the second optical frontend and the storage device, allow the optical node to receive simultaneously two optical signals and to perform optical to electrical conversions. Advantageously the first optical frontend and the second optical frontend offer the simultaneous receiving and processing in parallel of the two optical signals. The cooperation between the storage device and the processing device allows the processing of the first raw electrical signal for extracting the first set of data, and then allows the processing of the second raw electrical signal for extracting the second set of data. The optical node offers the ability to receive two optical signals and to further process them in the electrical domain for extracting sets of data with a single processing device. Advantageously the optical node offers means for simultaneous receiving of optical signals further processed by one processing device. The optical node offers then an affordable apparatus with two optical frontends and one processing device for receiving multiple optical signals. The optical node offers also a simple architecture that complies with energy consumption constraints of optical networks.

According to various embodiments, such optical node comprises one or more of the features below, which should be considered in any possible technical combinations:
- the optical node comprises an electronic layer for being provided sequentially with the first set of data and the second set of data,
- the optical node comprises an optical transmitter for converting from electrical domain to optical domain a transmit set of data into a transmit optical signal and for transmitting said transmit optical signal,
- the electronic layer provides the transmit set of data to the transmitter,
- the transmitter is adapted to fast tune on a carrier wavelength for transmitting the transmit optical signal through said carrier wavelength,
- the first optical frontend is adapted to fast tune on a carrier wavelength for receiving the first optical signal conveyed through said carrier wavelength,
- the first optical frontend is adapted to receive the first optical signal being conveyed on a first carrier wavelength, and wherein the second optical frontend is adapted to receive the second optical signal being conveyed on a second carrier wavelength,
- the first carrier wavelength and the second carrier wavelength are different carrier wavelengths, and the first optical frontend and the second optical frontend respectively receive the first optical signal and the second optical signal on an optical waveguide,
- the first carrier wavelength and the second carrier wavelength are the same carrier wavelength, and wherein the first optical frontend receives the first optical signal on an optical waveguide and the second optical frontend receives the second optical signal on another optical waveguide,
- the optical node is comprised in an optical slot switched network, the first optical signal being time slotted according to a first time slot structure, the second optical signal being time slotted according to a second time slot structure,
- a time slot from the first time slot structure and a time slot from the second time slot structure are overlapping, and the storage device and the processing device are adapted for cooperating for extracting the first set of data and the second set of data in a duration comprised in the union of the duration of the time slot from the first time slot structure and the duration of the time slot from the second time slot structure,
- the first optical signal is conveyed through a first carrier wavelength in a time slot from the first time slot structure and is conveyed through a second carrier wavelength in another time slot from the first time slot structure.

A second aspect of the invention relates then to a method for receiving simultaneously a first optical signal conveying a first set of data and a second optical signal conveying a second set of data, the first of data and the second set of data being respectively informative data, said method comprising the following steps performed by an optical node:
- receiving the first optical signal by a first optical frontend comprised in the optical node,
- converting by the first optical frontend from optical domain to electrical domain, the received first optical signal into a first raw electrical signal,
- receiving the second optical signal by a second optical frontend comprised in the optical node,
- converting by the second optical frontend from optical domain to electrical domain the received second optical signal into a second raw electrical signal,
- storing simultaneously the first raw electrical signal and the second raw electrical signal by a storage device comprised in the optical node and connected to the first optical frontend and to the second optical frontend,
- providing by the storage device the first raw electrical signal to a processing device comprised in the optical node and connected to the storage device, and extracting by said processing device the first set of data from said first raw electrical signal, and,
- providing by the storage device the second raw electrical signal to the processing device, and extracting by said processing device the second set of data from said second raw electrical signal.

Thus, thanks to these features, the method allows the optical node to receive simultaneously the first optical signal and the second optical signal. The method further allows the optical node to convert from the optical domain to the electrical domain the first optical signal into the first raw electrical signal, and the second optical signal into the second raw electrical signal. The first raw electrical signal and the second raw electrical signal are stored simultaneously in the storage device. The method offers the cooperation between the optical frontends and the storage device for the simultaneous storing of the first and second raw electrical signal. Such cooperation is advantageous for storing the output of the parallel respective conversions of the first and second optical signal. The method offers the cooperation between the storage device and the processing device for sequentially the first raw electrical signal and the second raw electrical signal to the processing device. Said cooperation between the storage device and the processing device allows the processing of the first raw electrical signal for extracting the first set of data, and then allows the processing of the second raw electrical signal for extracting the second set of data. The method offers the ability to the optical node to receive two optical signals and to further process them in the electrical domain for extracting sets of data with a single processing device. Advantageously the method offers the simultaneous receiving of optical signals by optical frontends and the further processing by one processing device. The method offers operations from two optical frontends and from one processing device for receiving multiple optical signals.

### BRIEF DESCRIPTION OF THE FIGURES

Some embodiments of the present invention are now described, by way of example only, and with reference to the accompanying drawings, in which:
- FIG. 1 is a schematic block diagram of an optical ring network according to an embodiment of the invention,
- FIG. 2 is a schematic block diagram of an optical node according to an embodiment of the invention,
- FIG. 3 is a schematic block diagram of the receiver from an optical node according to an embodiment of the invention,
- FIG. 4a is a schematic diagram of time slot structures from optical signals managed by an optical node according to an embodiment of the invention,
- FIG. 4b is another schematic diagram of time slot structures from optical signals managed by an optical node according to an embodiment of the invention,
- FIG. 5a is another schematic block diagram of an optical ring network according to embodiments of the invention.
- FIG. 5b is a schematic diagram of insertion latency on an optical ring network OR according to embodiments of the invention.

The same reference number represents the same element to the same type of element on all drawings, unless stated otherwise.

### DESCRIPTION OF EMBODIMENTS

The invention is defined by the apended claims. Embodiments and examples not covered by the claims are meant to illustrate, an facilitate the understanding of, the claimed invention.

In the following description, well-known functions or constructions by the man skilled in the art are not described in detail since they would obscure the invention in unnecessary detail.

In the following description of the figures, the elements designated with arrows are depicting either optical signals carried on waveguides or electrical signals carried on wired connections. The orientations of the arrows symbolize the propagation direction of the optical and/or electrical signals. Such schematic representations are non limiting and serve only for the understanding of the invention.

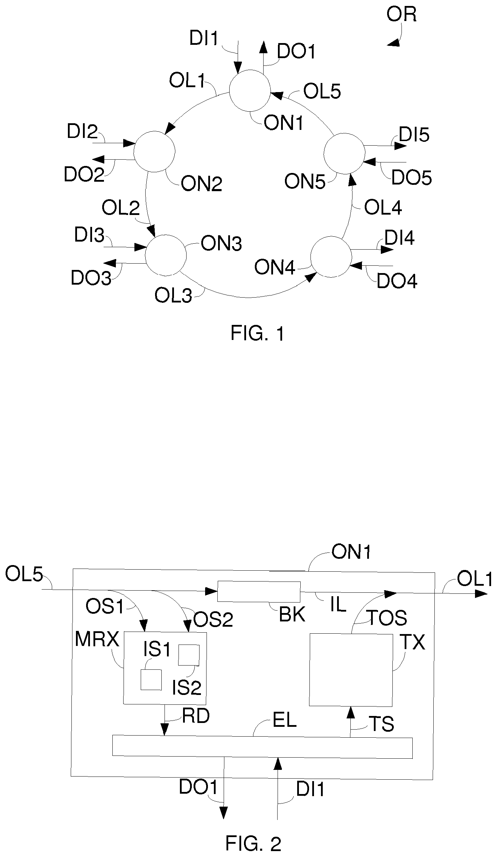

Referring to figure **FIG. 1****,** a schematic block diagram of an optical ring network is depicted.

In an embodiment an optical ring network OR is depicted as a schematized and simplified representation.

In an example the optical ring network OR is implemented in a datacenter (not depicted) and interconnects the servers, the storage units and the control centers of the datacenter and interconnects also the datacenter with other datacenters.

In another example the optical ring network OR is implemented in a metropolitan area network and interconnects its network elements together and interconnects said metropolitan network to other networks.

The optical ring network OR comprises:
- a first optical node ON1, and a second optical node ON2, interconnected through a first optical link OL1,
- a third optical node ON3, interconnected with the second optical node ON2 through a second optical link OL2,
- a fourth optical node ON4, interconnected with the third optical node ON3 through a third optical link OL3,
- a fifth optical node ON5, interconnected with the fourth optical node ON4 through a fourth optical link OL4, and interconnected with the first optical node ON1 through a fifth optical link OL5.

The first optical link OL1, the second optical link OL2, the third optical link OL3, the fourth optical link OL4 and the fifth optical link OL5 are optical waveguides adapted to convey optical signals. In an example the first optical links is able to transport informative data as well as signaling and control data. In examples such optical links are optical waveguides such as optical fibers. In an example the optical fibers used for the mentioned optical links are all the same kind of fibers, but in another example, the optical fibers can be different from a segment from the optical ring network OR to another segment. In another example the optical links are multi carrier wavelengths optical fibers enabled to convey simultaneously multiple optical signals, each being carried over a dedicated carrier wavelength.

In an embodiment, an optical link such as the first optical link OL1 or the fifth optical link OL5 is a logical entity aggregating several multi carrier wavelengths optical fibers. In a non limiting example, the fifth optical link OL5 comprises two optical waveguides, each being enabled to convey optical signals on multiple carrier wavelengths. In yet another non limiting one of the two optical waveguides comprised in the optical link OL5 belongs to the optical ring network OR and also to another optical ring network (not depicted in the figure FIG. 1).

The mentioned optical links are schematized with arrows in order to depict a counterclockwise propagation of the optical signals across the optical ring network OR. In another example but not depicted in figure FIG. 1, the arrows are oriented in a clockwise manner to symbolize a clockwise propagation of the optical signals across the optical ring network OR. In another example the optical ring network OR is adapted to manage bidirectional propagation of optical signals.

In an example, in a metropolitan area network, the distance of the optical links between the neighboring optical nodes is 40 km which is covered in a duration of 0.2 millisecond with optical signals.

It is to be noted also that the optical ring network OR can be a full type ring forming a closed loop, or otherwise can be a partial ring. In the latter, the optical ring network OR is as an optical bus network with optical links and optical nodes adapted to manage bidirectional propagation of optical links.

The first optical node ON1, the second optical node ON2, the third optical node ON3, the fourth optical node ON4 are optical nodes along the optical ring network OR and are adapted to insert and receive optical signals on said optical ring network OR. In examples such optical nodes are usually placed nearby or integrated in the network elements of the datacenter, or of the segments of the metropolitan network, for allowing them to send and receive chunks of data, that are conveyed through optical signals across the optical ring network OR.

The first optical node ON1 comprises an input port for inputting data streams schematized by the arrow first data input signal DI1. The first optical node ON1 comprises an output port for outputting data streams schematized by the arrow first data output signal D01. In examples, the data input signal DI1 comprises control or informative data incoming from a network element from a metropolitan area network that are addressed to another network element from said metropolitan area network, whereas the data output signal D01 results from the data sent over the optical ring network OR from other network elements from said metropolitan network and addressed to network element associated to the first optical node ON1.

Similarly to the first optical node ON1, the second optical node ON2 comprises an input port for inputting data streams schematized by the arrow second data input signal DI2, and an output port for outputting data streams schematized by the arrow second data output signal DO2. The second data input signal DI2 comprises data to be inserted by the second optical node ON2 on the optical ring network OR and addressed to another optical node. The second data output signal DO2 comprises data that were conveyed on the optical ring network OR and addressed to the second optical node ON2 as their destination point.

Similarly to the first optical node ON1, the third optical node ON3 comprises an input port for inputting data streams schematized by the arrow third data input signal DI3, and an output port for outputting data streams schematized by the arrow third data output signal DO3. The third data input signal DI3 comprises data to be inserted by the third optical node ON3 on the optical ring network OR and addressed to another optical node. The third data output signal DO3 comprises data that were conveyed on the optical ring network OR and addressed to the third optical node ON3 as their destination point.

In examples, the other optical nodes such as the fourth optical node ON4 and the fifth optical node ON5 also comprise input and output port for transmitting incoming data streams and receiving data streams that are not depicted in figure FIG. 1.

In an embodiment, the data streams such as the first data input signal DI1, the first data output signal DO1, the second data input signal DI2, the second data output signal DO2, the third data input signal DI3 and the third data output signal DO3 can be the respective aggregation of several data sub-streams. For example, at a given instant, the first data output signal D01 can result from the simultaneous receiving of optical signals respectively comprising data originated from the second data input signal DI2 and from the third data input signal DI3. The details of the first optical node ON1 according to the invention are described hereinafter.

Referring to figure **FIG. 2****,** a schematic block diagram of an optical node according to an embodiment of the invention is depicted.

Details on the first optical node ON1 are provided.

In an embodiment, the first optical node ON1 is adapted to transmit optical signals to be conveyed on the first optical link OL1 and to receive optical signals conveyed by the fifth optical link OL5. The first optical node ON1 can be either an endpoint for optical signals addressed to said first optical node ON1, or a start point for optical signals addressed to other optical nodes from the optical ring network OR.

In other cases, the first optical node ON1 is also an optical node to be crossed transparently or almost transparently by optical signals that are generated by others optical nodes and addressed to yet others optical nodes. For example, the fifth optical node ON5 transmits an optical signal directed to the second optical node ON2. Such optical signal is conveyed through the fifth optical link OL5, passes across the first optical node ON1 and propagates further on the first optical link OL1 up to the second optical node ON2. In an example, signaling and control signals are conveyed to the first optical node ON1 to indicate that the optical signal is not intended to be processed by said first optical node ON1 and that it should be let pass through. For letting optical signals pass through, the first optical node ON1 comprises a first internal link IL1 that interconnects the fifth optical link OL5 to the first optical link OL1. In an embodiment the first internal link IL1 comprises a blocker BK for blocking partially or fully optical signals conveyed on the fifth optical link OL5. In an example the blocker BK is a wavelength blocker enabled to selectively block some carrier wavelengths and let pass through the other carrier wavelengths that are propagating through the fifth optical link OL5. In another example, the blocker BK is a slot blocker and is enabled to partially or fully block a given optical slot during which optical packets are carried by different carrier wavelengths.

In an embodiment, the first optical node ON1 comprises an electronic layer EL which is adapted to receive the first data input signal DI1, and to output the first data output signal D01. The electronic layer EL comprises various means such as means for managing data queues, means for segmenting data, means for reassembling segmented data etc.

The electronic layer EL processes the first data input signal DI1 in order to generate a transmit set of data TS. In examples the processing of the first data input signal DI1 comprises operation of packet and queue management, control information and redundancy information generation, etc.

In an embodiment, the transmit set of data TS is provided to a transmitter TX, comprised in the first optical node ON1. The transmitter TX comprises means for formatting the transmit set of data TS and for converting said formatted transmit set of data TS into the optical domain. The optical conversion of the transmit set of data TS is a transmit optical signal TOS. In an example the transmitter TX comprises a Forward Error Correction mapper, an electrical to optical converter, a laser and optical modulators. The transmitter TX is connected to the first optical link OL1 for outputting on said optical link the transmit optical signal TOS. The transmitter TX can also be connected to the first internal link IL1, as depicted on figure FIG. 2, and be enabled to insert the transmit optical signal TOS on said internal link IL1, the transmit optical signal TOS propagating further through the first optical link OL1.

In an embodiment, the first optical node ON1 comprises a multi-receiver MRX. As depicted in figure FIG. 2, the multi-receiver MRX is connected to the first internal link IL1 and receives a first optical signal OS1 and a second optical signal OS2, each optical signal being received through a dedicated connection between the multi-receiver MRX or through a common connection. The first optical signal OS1 and the second optical signal OS2 are respectively optical signals that were generated by other optical nodes, for example respectively the second optical node ON2 and the third optical node ON3. The first optical signal OS1 and the second optical signal OS2 are received simultaneously by the first optical node ON1 and by its multi-receiver MRX.

It is meant by the term "simultaneous" or its derivatives such as the term "simultaneously", two or more instant that are happening at the same time or within a short duration. When such terms are combined with actions or events, it is meant that the actions or events are happening at the same instant or each of them happens in a short timeframe duration. For example, it is meant by the terms "optical signals received simultaneously", that optical signals are received at the same instant or in a very short timeframe duration.

In an example, a first carrier wavelength is reserved and assigned to the first optical signal OS1 to be transmitted by the second optical node ON2, and the said first carrier wavelength is configured in the multi-receiver MRX from the first optical node ON1. A second carrier wavelength is reserved and assigned to the second optical signal OS2 for being transmitted by the third optical node ON3, and the said second carrier wavelength is configured in the multi-receiver MRX from the first optical node ON1. The respective transmissions of the first optical signal OS1 and the second optical signal OS2 are simultaneous or almost simultaneous, meaning that they start at the same instant or around the same instant. The multi-receiver MRX receives through the fifth optical link OL5 the first optical signal OS1 and the second optical signal OS2, both having propagated over the optical ring network OR through its optical nodes and optical links. The respective receiving by the first optical node ON1 of the first optical signal OS1 and the second optical signal OS2 at the multi-receiver MRX side is simultaneous or almost simultaneous in that there exists no delay or very small delay between the effective beginning of the respective first optical signal OS1 and the second optical signal OS2.

In another example, the optical ring network OR is an optical slot switched network. In an optical slot, or so called time slot hereinafter, the second optical node ON2 inserts the first optical signal OS1 being an optical packet carried on a first carrier wavelength. Once said slot reaches the third optical node ON3, the second optical signal OS2 is inserted into said slot as another optical packet. After the insertion by the third optical node ON3, the optical slot conveys two optical packets, the first optical signal OS1 and the second optical signal OS2. The optical slot is propagated along the lightpath of the optical ring network OR, through its optical nodes and optical links. The optical slot reaches then the first optical node ON1 that receives simultaneously the first optical signal OS1 and the second optical signal OS2.

The multi-receiver MRX processes simultaneously the first optical signal OS1 and the second optical signal OS2.

Resulting from said processing, in a first phase, a first set of data IS1 is obtained from the first optical signal OS1. Said first set of data IS1 comprises the informative data conveyed by the first optical signal OS1. The set of data IS1 was at the source of the generation of the first optical signal OS1 when it was transmitted by its originating optical node.

Resulting from the processing of the multi-receiver MRX, a second set of data IS2 is obtained from the second optical signal OS2. The second set of data IS2 comprises the informative data conveyed by the second optical signal Os2. The second set of data IS2 was at the source of the generation of the second optical signal OS2 when it was transmitted by its originating optical node.

In examples, in an optical slot switched network, the first set of data IS1 is comprised in the optical packet carried by the first optical signal OS1 during an optical slot, and the second set of data IS2 is the optical packet carried by the second optical signal OS2 during the said optical slot.

In another example, the first set of data IS1 is comprised in a larger chunk of informative data segmented in smaller data packets to be transmitted as successive first set of data IS1 by the originating node of the first optical signal OS1.

The multi-receiver MRX outputs a receive set of data RD and provides it to the electronic layer EL. The receive set of data RD carries successively the first set of data IS1 and the second set of data IS2 to the electronic layer EL. In an example, the electronic layer EL forwards the first set of data IS1 to the datacenter network element associated with the first optical node ON1, and provides then the second set of data IS2 to the queue management associated with the transmitter TX, in order for said second set of data IS2 to be combined with other informative data and for being transmitted by the transmitter TX on the optical ring network OR. Burst mode optical signals usage allows to increase the transmission capacity by using advanced modulation formats.

In an embodiment the first optical node ON1 is adapted to receive burst-mode optical signals transiting on the optical ring network OR. In such case the multi-receiver MRX is a burst mode coherent receiver adapted for simultaneously the first optical signal OS1 and the second optical signal OS2.

Referring to figure FIG. 3 a schematic block diagram of the receiver from an optical node according to an embodiment of the invention is depicted.

In an embodiment, the receiver from the first optical node ON1 is the multi-receiver MRX. It comprises a first input port IP1 for connecting an optical waveguide conveying optical signals such as the first optical signal OS1. The multi-receiver MRX also comprises a second input port IP2 for connecting another optical waveguide conveying optical signals such as the second optical signal OS2. As described previously, the first optical signal OS1 and the second optical signal OS2 may be each carried on a dedicated carrier wavelength within the same optical signal. They can be also two separate optical signals, for example each incoming on a dedicated optical waveguide connected to the first optical node ON1 and the appropriate input port such as the first input port IP1 or the second input port IP2.

The multi-receiver MRX further comprises a first optical frontend OF1. The first optical frontend OF1 receives and processes the first optical signal OS1. The first optical frontend OF1 comprises means for converting from the optical domain to the electrical domain the first optical signal OS1.

A possible functional arrangement of the first optical frontend OF1 is the following:
- a first coherent mixer MX1, comprised in the first optical frontend OF1 is tuned to a first carrier wavelength L1 obtained from a first local oscillator (not depicted in figure FIG. 3), corresponding to the carrier wavelength of the first optical signal OS1,
- a first photodiode detector PD1, comprised in the first optical frontend OF1, is provided with the output from the first coherent mixer MX1. The first photodiode detector PD1 and the first coherent mixer MX1 cooperates to detect and capture the light signal from the first optical signal OS1,
- a first analog to digital converter AC1, comprised in the first optical frontend OF1, is provided with the signal generated by the first photodiode detector PD1. The first analog to digital converter AC1 outputs a first raw electrical signal RS1 obtained from the photodetection of the first photodiode detector PD1.

The multi-receiver MRX also comprises a second optical fronted OF2. The second optical fronted receives and processes the second optical signal OS2. The second optical frontend OF2 comprises means for converting from the optical domain to the electrical domain the second optical signal OS2.

Similarly to the possible arrangement of the first optical frontend OF1, a possible arrangement of the second optical frontend OF2 is the following:
- a second coherent mixer MX2, comprised in the first optical frontend OF2 is tuned to a second carrier wavelength L2 obtained from a second local oscillator (not depicted in figure FIG. 3), corresponding to the carrier wavelength of the second optical signal OS2,
- a second photodiode detector PD2, comprised in the second optical frontend OF2, is provided with the output from the second coherent mixer MX2. The second photodiode detector PD2 and the second coherent mixer MX2 cooperates to detect and capture the light signal from the second optical signal OS2,
- a second analog to digital converter AC2, comprised in the second optical frontend OF2, is provided with the signal generated by the second photodiode detector PD2. The second analog to digital converter AC2 outputs a second raw electrical signal RS2 obtained from the photodetection of the second photodiode detector PD2.

Coherent mixer such as the first coherent mixer MX1 or the second coherent mixer MX2 offers the ability to the multi-receiver MRX to recover the emitting frequency or carrier wavelength which results into a high flexibility of the multi-receiver MRX.

Photodiode detector such as the first photodiode detector or the second photodiode detector usually comprises a plurality of photo diodes for detecting, capturing light signals. In an example, 4 pairs of photo diodes are used in a photodiode detector such as the first photodiode detector.

Analog to digital converters such as the first analog to digital converter AC1 or the second analog to digital converter AC2 usually comprises a plurality of analog to digital conversion branches. In an example the first analog to digital converter AC1 comprises 4 analog to digital converters.

Other arrangements for the respective first optical frontend OF1 and second optical fronted OF2 are possible. For example the first coherent mixer MX1 and the first photodiode detector PD1 can be combined with a same device.

The first optical frontend OF1 provides the first raw electrical signal ES1 to a storage device MM comprised in the multi-receiver MRX. Similarly the second optical frontend OF2 provides the second raw electrical signal ES2 to the storage device MM.

The storage device MM comprises connection means (not depicted in figure FIG. 3) that connects it to the first optical fronted OF1 and to the second optical frontend OF2.

The storage device MM is a device adapted for storing digital samples that are comprised in electrical signals such as the first raw electrical signal RS1 and the second raw electrical signal RS2. The storage device MM is adapted to store simultaneously the first raw electrical signal RS1 and the second raw electrical signal RS2.

In an example, the storage device MM comprises control units and write units that allows it to write digital sample into logical unit at the same time. It means that the storage device MM is enabled to manage at the same time the stream of information of the first raw electrical signal RS1 and the stream of information of the second raw electrical signal RS2.

In an example, the storage device MM is a fast writable/readable memory device able to sustain simultaneous operations of write.

In an example, in an optical slot switched network, the sizing of the storage device MM is in the magnitude of (DR x SD x N x R x M), where DR is the maximum data rate sustained on the optical ring network OR (there can be different data rates sustainable on different optical waveguides from the optical links), SD is the slot duration, N is the number of the receiving capabilities of the multi-receiver MRX (for example from 2 to 10), R is the resolution in bits (the number of bits per samples after conversion) of the analog to the digital converters such as the first analog to digital converter AC1, and M is the number of optical/time slots to be buffered (for example 2 to 3 time slots). For the optical ring network OR enabled to sustain data rate of 100 gigabits (Gb) per second, the duration of an optical slot of 1 microsecond (in another example the duration of an optical/time slot is 2 microseconds), with 2 receiving branches (optical frontend) on the multi-receiver MRX, with an 8 bits resolution of the analog to digital converters, and tailored to buffered up to 2 time slots, the sizing of the storage device is in the order of 100.10⁹ × 10⁻⁶ x 2 x 8 x 2 = 3200000 bits.

The storage device MM is connected to a processing device PU. The processing device PU is adapted to perform digital signal processing operations and functions for extracting informative data originally conveyed on an optical transport means. In an example, the processing device PU may comprise functions such as:
- chromatic dispersion compensation function,
- polarization demultiplexing and equalization functions,
- carrier frequency estimation functions,
- carrier phase estimation functions,
- samples decision function,
- samples demapper and Forward Error Correction functions.

In an example, the processing device PU is a Digital Signal Processor (DSP) adapted to perform signal processing operations. In another example the processing device PU is the combination of a DSP or of a General Purpose Processor (GPP) with a dedicated computing unit such as a Field Programmable Gate Array (FPGA).

The processing device PU is provided with the stored first raw electrical signal RS1 by the storage device MM. The processing device PU processes said first raw electrical signal RS1 in order to extract the informative signal comprised in the raw digital samples of the first raw electrical signal RS1.

The processing device PU is enabled through its processing means to output the first set of data IS1 from the provided first raw electrical signal RS1, the first set of data IS1 being the informative data carried by the first optical signal OS1 up to the first optical node ON1.

The processing device PU is then provided with the second raw electrical signal RS2 by the storage device MM. The processing device PU processes said second raw electrical signal RS2 for extracting the informative data it comprises. Said informative data has been conveyed to the first optical node ON1 through the second optical signal OS2.

The processing device PU is enabled through its processing means to output the second set of data IS2 from the provided second raw electrical signal RS2, the second set of data IS2 being the informative data carried by the second optical signal OS2 up to the first optical node ON1.

In an embodiment the storage device MM provides sequentially the full first raw electrical signal RS1 and then the full raw electrical signal RS2 to the processing device PU.

In another embodiment, the storage device MM provides sequentially portions or slices of the first raw electrical signal RS1 and the second raw electrical signal RS2. In an example, a time slot is further subdivided into sub-slots, the storage device MM provides a first slice of the first raw electrical signal RS1 corresponding to a first sub-slot to the processing device PU for processing, and then provides a first slice of the second raw electrical signal RS2 corresponding to said first sub-slot to said processing device PU for processing. Then the storage device MM provides a second slice of the first raw electrical signal RS1 corresponding to a second sub-slot to the processing device PU for processing, and then provides a second slice of the second raw electrical signal RS2 corresponding to said second sub-slot to said processing device PU for processing. In such case the processing device PU processes alternatively slices from the first raw electrical signal RS1 and from the second raw electrical signal RS2.

The multi-receiver MRX provides then sequentially the first set of data IS1 and the second set of data IS2 through the receive set of data RD to the electronic layer EL through an output port OP. In an example, in a first transaction between the multi-receiver MRX and the electronic layer EL, the receive set of data RD conveys the first set of data IS1. In a second transaction between the multi-receiver MRX and the electronic layer EL, the receive set of data RD conveys the second set of data IS2. In another example, the processing device PU processes portions or slices of the first raw electrical signal R1, and portions or slices of the second raw electrical signal RS2, each slice from one of the raw electrical signal being processed after a slice from the other raw electrical signal, and extracts portions or slices of the respective first set of data IS1 and second set of data IS2. Said slices of the respective first set of data IS1 and second set of data IS2 are provided sequentially by the multi-receiver MRX to the electronic layer EL.

The multi-receiver MRX receives simultaneously the first optical signal OS1 and the second optical signal OS2 and comprises means for processing and converting said optical signals from the optical domain into the electrical domain. Such processing and converting operations are performed in parallel at the same time by the first optical frontend OF1 and the second optical frontend OF2. The outputs of said optical frontends, the respective first raw electrical signal RS1 and second raw electrical signal RS2 are stored simultaneously in the storage device MM. Said storage device MM provides then sequentially the first raw electrical signal RS1 and the second raw electrical signal RS2 to the processing device PU, in charge of digital signal processing operations, for extracting at first the first set of data IS1, and at second, the second set of data IS2. Said first set of data IS1 and second set of data IS2 are then provided to the electronic layer EL for further management. In an example, said further management is the forwarding of the first set of data IS1 and of the second set of data IS2 to the metropolitan area network element associated with the first optical node ON1. In another example said further management is the storage of the first set of data IS1 in a reassembly queue for waiting completion of arrival of all the segments of a chunk of informative data, said segments being conveyed by successive first optical signal OS1, whereas the second set of data IS2 is further managed by being provided to the transmitter TX for being transmitted again on the optical ring network OR. The retransmission in the optical domain of the second set of data IS2 after having been converted into electrical domain is similar to an optical regeneration mechanism.

In a preferred embodiment, the multi-receiver MRX comprises two optical frontends enabling it to receive and process simultaneously two optical signals.

In another embodiment, the multi-receiver MRX comprises more than two optical frontends, enabling to receive simultaneously as many optical signals as the number of optical frontends.

In yet another embodiment, the number of optical frontends from the multi-receiver MRX is comprised between two and the number of optical channels available on the optical ring network OR. Depending on the number of optical frontends, the processing device PU is adapted accordingly to be able to process sequentially the raw electrical signals outputted by the processing of each of the optical frontends of the multi-receiver MRX and provided by the storage device MM.

In an embodiment, the first optical frontend OF1 is adapted to be fast tunable on carrier wavelengths. The first optical frontend OF1 is enabled to tune on a carrier wavelength, through its local oscillator and coherent mixer for example, in a very short timeframe. For example in an optical slot switched network, the first optical frontend OF1 is adapted to tune on a carrier wavelength on a per optical slot basis. It means that the first optical frontend OF1 is able to receive the first optical signal OS1 being conveyed with a different carrier wavelength at each optical slot. The first optical fronted OF1 is adapted to tune on a carrier wavelength in a timeframe shorter than the duration of an optical slot.

Similarly, in an embodiment, the second optical frontend OF2 is adapted to be fast tunable on carrier wavelengths. In an example the second optical frontend OF2 is enabled to tune on a carrier wavelength at the same pace as the first optical frontend OF1.

In an embodiment, the transmitter TX from the first optical node ON1 is adapted to be fast tunable on carrier wavelengths. The transmitter TX is adapted to tune on a carrier wavelength in a very short period of time. For example in an optical slot switched network, the transmitter TX is adapted to tune on a carrier wavelength on a per optical slot basis. It means the transmitter TX is able to transmit the transmit optical signal TOS to be conveyed with a different carrier wavelengths at each optical slot. Fast tunable transmitter TX allows to share the traffic over all carrier wavelengths available in the optical ring network OR, to perform load balancing.

Referring to figure **FIG. 4a** and figure **FIG. 4b****,** schematic diagrams of time slot structures from optical signals managed by an optical node according to embodiments of the invention.

The x-axis T is the time axis for depicting the duration of time. The y-axis L is the carrier wavelength axis for depicting the optical resources of the optical ring network OR.

In an embodiment, the optical ring network OR is an optical slot switched network.

In the optical rig network OR, the first optical signal OS1 is a time slotted optical signal according to a first time slot structure TS1. Each optical slot from the first time slot structure TS1 may comprise an optical packet comprised in the first optical signal OS1. It may be understood also that the first optical signal OS1 comprises a plurality of optical packets being distributed amongst the optical slots from the first time slot structure TS1, which in such case renders the first optical signal OS1 as being fragmented over time. It may be understood also that the first optical signal OS1 is a single optical packet conveyed on the first carrier wavelength L1 during a single optical slot from the first time slot structure TS1. It is made reference hereinafter of the above and all other possible arrangements of the first optical signal OS1 in the first time slot structure TS1.

In the optical ring network OR, the second optical signal OS2 is a time slotted optical signal according to a second time slot structure TS2. Similarly as the first time slot structure TS1, different arrangements of the second optical signal OS2 in the second time slot structure TS2 are possible. It is to be noted that the possible arrangements of the first optical signal OS1 in the first time slot structure TS1 can be different from the possible arrangements of the second optical signal OS2 in the second time slot structure TS2.

In figure FIG. 4a, in an embodiment, a time slot from the first time slot structure TS1 is depicted and starts at an instant T1 and ends at an instant T2. An optical packet from the first optical signal OS1 is transmitted, received and processed within the duration defined by the interval T1 to T2. A time slot from the second time slot structure TS2 is depicted and starts at the instant T1 and ends at the instant T2. An optical packet from the second optical signal OS2 is transmitted, received and processed within the duration defined by the interval T1 to T2.

The first optical signal OS1 and the second optical signal OS2 are carried on different carrier wavelengths, respectively the first carrier wavelength L1 and the second carrier wavelength L2, on the same optical waveguide comprised in the optical ring network OR. In such case the first time slot structure TS1 and the second time slot structure TS2 are identical. As described herein above, the possible arrangements of the first optical signal OS1 and the second optical signal OS2 in the respective first time slot structure TS1 and second time slot structure TS2 may conduct to the case wherein the first optical node ON1 receives simultaneously, in the same optical slot, an optical packet from the first optical signal OS1 and an optical packet from the second optical signal OS2.

In an embodiment, the first optical frontend OF1 is fast tunable and is adapted to tune on a different carrier wavelength at each time slot from the first time slot structure TS1.

In figure FIG. 4b, another scheme of the first time slot structure TS1 and the second time slot structure TS2 is depicted. The first optical signal OS1 is carried on a first optical waveguide during a time slot of the first time slot structure TS1, and the second optical signal OS2 is carried in a second optical waveguide during a time slot from the second time slot structure TS2, the second optical waveguide being different from the first optical waveguide. It is possible also that in a scheme, the first optical signal OS1 and the second optical signal OS2 are carried on the same optical waveguide, but in different optical bands, each band having its specific timing structure. In such cases the first time slot structure TS1 and the second time slot structure TS2 can be different. It means that the two time slot structures are not synchronized. The time slot from the first time slot structure TS1 may start earlier than the time slot from the second time slot structure TS2. In an example the two time slots are overlapping in an overlapping area OV.

The time slot from the first time slot structure TS1 starts at the third instant T3 and ends at the fourth instant T4. The time slot from the second time slot structure starts at the fifth instant T5 and ends at the sixth instant T6. The third instant T3 is anterior to the fifth instant T5, which is anterior to the fourth instant T4. The overlapping and start time difference result in the beginning of the receiving of the first optical signal OS1 earlier than the beginning of the receiving of the second optical signal OS2. The multi-receiver MRX needs to receive and process simultaneously the first optical signal OS1 and the delayed second optical signal OS2 as it is possible that the beginning of the second optical signal OS2 starts while the optical packet from the first optical signal OS1 is not yet fully received. As described hereinabove such overlapping of the respective optical slots from the first time slot structure TS1 and the second time slot structure TS2 is managed by the ability of the first optical node ON1 to receive and manage simultaneously a plurality of optical signals.

Furthermore, in case an optical slot or time slot from the first time slot structure TS1 overlaps with an optical slot or time slot from the second time slot structure TS2, the storage device MM and the processing device PU are adapted for cooperating for the extraction of the first set of data IS1 and the second set of data IS2 in a duration comprised in the union of the duration of the optical/time slot from the first time slot structure TS1 and the duration of the optical/time slot from the second time slot structure TS2. The union of the durations of the respective time slots is depicted as an union duration UD in figure FIG. 4b.In an example, the duration of the time slot from the first time slot structure TS1 is 1 microsecond, the duration of the second time slot structure TS2 is 1.1 microsecond, the respective time slots are overlapping in a duration of 0.7 microsecond, the storage device MM and the processing device PU are adapted to perform the extraction of the first set of data IS1 and the second set of data IS2 in a duration less than (1.1 + 1) - 0.7 = 1.4 microsecond.

Referring to figure **FIG. 5a****,** another schematic block diagram of an optical ring network according to embodiments of the invention is depicted.

The optical ring network OR is an optical slot switched network and comprises a first lightpath LP1 for conveying optical signals on the first carrier wavelength L1 and a second lightpath LP2 for conveying optical signals on the second carrier wavelength L2. The first lightpath LP1 comprises the first optical link OL1, the second optical link OL2, the third optical link OL3, the fourth optical link OL4 and the fifth optical link OL5. Similarly to the second lightpath LP2 comprises the first optical link OL1, the second optical link OL2, the third optical link OL3, the fourth optical link OL4 and the fifth optical link OL5 (the optical links are not depicted in figure FIG. 5a).

The first optical node ON1 and the fifth optical node ON5 respectively comprise a multi-receiver MRX according to embodiments of the invention, allowing the respective first optical node ON1 and fifth optical node ON5 to receive simultaneously at least two optical signals. Said multi-receivers are fast tunable, adapted to tune on a carrier wavelength on a per optical/time slot basis. It is to be noted that other optical nodes from the optical ring network OR may also respectively comprise multi-receiver MRX according to embodiments of the invention.

The second optical node ON2, the third optical node ON3, the fourth optical node ON4 and the fifth optical node ON5 respectively comprise fast tunable transmitter TX. It is to be noted that first optical node ON1 may also respectively comprise fast tunable transmitter TX according to embodiments of the invention.

A third optical signal OS3 (depicted with a plain line) is generated by the second optical node ON2 from a third set of data (not depicted in figure FIG. 5a). The third set of data, and subsequently the third optical signal OS3, conveys control and/or data traffic of amplitude A. Half the control and/or data traffic of amplitude A from the third optical signal OS3 is addressed to the fifth optical node ON5, and half the control and/or data traffic of amplitude A from the third optical signal OS3 is addressed to the first optical node ON1.

A fourth optical signal OS4 (depicted with a dashed line) is generated by the third optical node ON3 from a fourth set of data (not depicted in figure FIG. 5a). The fourth set of data, and subsequently the fourth optical signal OS4, conveys control and/or data traffic of amplitude A. It is to be noted that the amplitude of the traffic carried by the fourth optical signal OS4 is chosen to be similar as the amplitude of the traffic carried by the third optical signal OS3 for an example purpose, but of course their respective amplitude can be different. Half the control and/or data traffic of amplitude A from the fourth optical signal OS4 is addressed to the fifth optical node ON5, and half the control and/or data traffic of amplitude A from the fourth optical signal OS3 is addressed to the first optical node ON1.

The third optical signal OS3 and the fourth optical signal OS4 are not assigned to a specific carrier wavelength. The third optical signal OS3 and the fourth optical signal OS4 are balanced amongst the first lightpath LP1 and the second lightpath LP2. It means that the optical packets from the respective third optical signal OS3 and fourth optical signal OS4 are distributed amongst the first carrier wavelength L1 and the second carrier wavelength L2 to be conveyed up to the first optical node ON1.

Once the third set of data and the fourth set of data are being delivered to their respective destination nodes, a fifth optical signal ON5 (depicted with a dotted line), generated by the fourth optical node ON4, is to be inserted on the optical ring network OR for conveying a fifth set of data (not depicted in figure FIG. 5a). The fifth set of data, and subsequently the fifth optical signal ON5 conveys control and/or data traffic of amplitude B. The fifth set of data is addressed in its entirety to the fifth optical node ON5.

The fifth optical signal OS5 is not assigned to specific carrier wavelength. The fourth optical node ON4 inserts the fifth optical signal OS5 according to the availability of carrier wavelengths in the time slots from the optical ring network OR. The ability of the fourth optical node ON4 to perform insertion on the optical ring network OR is further detailed in figured FIG. 5b.

Referring to figure FIG. 5b, a schematic diagram of insertion latency on an optical ring network OR according to embodiments of the invention is depicted.

The insertion latency diagram depicts the insertion latency in number of time slots according to the traffic amplitude B from the fifth set of data conveyed by the fifth optical signal OS5.

The x-axis TB is the normalized traffic amplitude B from the fifth set of data.

The y-axis LT is the insertion latency in number of time slots. It corresponds to the number of slots before the fourth optical node ON4 is able to send optical packets from the fifth optical signal OS5 on the optical ring network OR.

The curve C1 depicts the insertion latency obtained by a standard optical node known from the prior art.

The curve C2 depicts the insertion latency obtained by optical nodes according to embodiments on the invention, such as the ability to receive simultaneously two optical signals, and the ability to fast tune the receiving chains and the transmitting chains.

For a traffic amplitude TB of 0.4, the insertion latency of the standard optical node is around 7 to 9 time slots. For the same traffic amplitude TB of 0.4, the insertion latency of the fourth optical node ON4 is around 1 time slot, thanks to the ability of the fifth optical node ON5 to receive simultaneously two optical signals.

In some optical ring network, the insertion latency has to be kept into an acceptable range, for example no more than 5 time slots in order to ensure an appropriate quality of service. For an insertion latency of 5 time slots, the standard optical node only offers to insert a traffic amplitude TB of around 0.35, whereas the fourth optical node ON4 offers to insert a traffic amplitude TB of around 0.7. The fourth optical node ON4 allows more traffic to be inserted.

From the standpoint of an optical/time slot, the fifth optical node ON5 is enabled to process twice the capacity of an optical node from the state of the art, when the fifth optical node ON5 receives simultaneously optical packets from two optical signals.

It shall be noted that the improvements of the total traffic that can be received by the first optical node ON1 and/or the fifth optical node ON5 are linked to their respective ability to receive simultaneously a plurality of optical signals. Overall improvement on the effective capacity of the optical ring network OR are also linked to the increased flexibility in the insertion of optical signals on the ring. Optical resources are less reserved or blocked when the optical nodes are enabled to simultaneously receive a plurality of optical signals. It allows a more optimized and effective carrier wavelength allocation within the optical ring network OR. As seen hereinabove, the fewer blocking of carrier wavelengths for traffic insertion benefits to reducing the latency of optical packets conveyed on the optical ring network OR. It allows to ease the mechanism of queues management at the electronic layer sides of the optical nodes which in turn simplifies the optical node such as the first optical node ON1 or the fifth optical node ON5.

In an embodiment, a method is performed by an optical node such as the first optical node ON1 or the fifth optical node ON5, for receiving simultaneously the first optical signal OS1 and the second optical signal OS2. The method comprises the following steps:
- first step: receiving the first optical signal OS1 by the first optical frontend OF1,
- second step: converting by the first optical frontend OF from optical domain to electrical domain, the received first optical signal OS1 into the first raw electrical signal RS1,
- third step: receiving the second optical signal OS2 by the second optical frontend OF2,
- fourth step: converting by the second optical frontend OF2 from optical domain to electrical domain the received second optical signal OS2 into the second raw electrical signal RS2,
- fifth step: storing the first raw electrical signal RS1 and the second raw electrical signal RS2 by the storage device MM,
- sixth step: providing by the storage device MM the first raw electrical signal RS1 to the processing device PU,
- seventh step: extracting the first set of data IS1 from said first raw electrical signal RS1 by the processing device PU,
- eighth step: providing by the storage device MM the second raw electrical signal RS2 to the processing device PU,
- ninth step: extracting the second set of data IS2 from the second raw electrical signal RS2 by the processing device PU.

The first and second steps are performed simultaneously to the third and the fourth steps. The first optical frontend OF1 and the second optical frontend OF2 are performing operations in parallel of each other.

The eighth and ninth steps are performed in sequence after the execution of the sixth step and the seventh step by the cooperation of the storage device MM and the processing device PU.

The first optical node ON1 offers a multi-receiver RX with two optical frontends for receiving simultaneously optical signals addressed to said first optical node ON1. The storage device MM and the processing device PU cooperate for extracting sequentially the raw electrical signals outputted by the two optical frontends. The first optical node ON1 can detect more than a single packet per time slot in an optical slot switched network and consequently has higher flexibility and bandwidth efficiency.

The invention advantageously offers two optical frontends allowing the first optical node ON1 to receive multiple optical signals simultaneously. The storage device MM and the processing device PU advantageously allow to factor the processing required after the conversion of the optical signals. The processing device PU is usually a costly component from an optical receiving chain in an optical node. The invention allows to have only a single processing device, cooperating with the storage device, for processing in sequence multiple raw electrical signals, and extracting the informative data they comprise. Furthermore using a single processing device is more efficient in terms of energy consumption as the digital signal processing of the electrically converted optical signals usually represent more than 70% of the total energy consumption of a receiving chain. The cooperation of the storage device and the processing device further allows to distribute the processing load, and subsequently the energy consumption over time in a time slot.

The factorization of the signal processing operation for multiple optical signals received simultaneously allows to reduce capital expenditures and operational expenditures of the optical node according to the invention. Such optical nodes according to the invention benefit for the overall capital and operational expenditures of the optical ring network. Other benefits in terms of effective traffic capacity and in terms of latency of the optical ring network are also offered.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

## Claims

1. An optical node (ON1) for receiving simultaneously a first optical signal (OS1) conveying a first set of data (IS1) and a second optical signal (OS2) conveying a second set of data (IS2), the first set of data (IS1) and the second set of data (IS2) being respectively informative data, the optical node (ON1) comprising:
- a first optical frontend (OF1) for receiving the first optical signal (OS1) and for converting from optical domain to electrical domain said first optical signal (OS1) into a first raw electrical signal (RS1),
- a second optical frontend (OF2) for receiving the second optical signal (OS2) and for converting from optical domain to electrical domain said second optical signal (OS2) into a second raw electrical signal (RS2),
- a storage device (MM) connected to the first optical frontend (OF1) and to the second optical frontend (OF2), and being adapted to store simultaneously the first raw electrical signal (RS1) and the second raw electrical signal (RS2),
- a processing device (PU) connected to the storage device (MM), and being provided sequentially with the stored first raw electrical signal (RS1) for extracting the first set of data (IS1), and with the stored second raw electrical signal (RS2) for extracting the second set of data (IS2).

2. An optical node (ON1) according to claim 1 further comprising an electronic layer (EL) for being provided sequentially with the first set of data (IS1) and the second set of data (IS2).

3. An optical node (ON1) according to claim 1 further comprising an optical transmitter (TX) for converting from electrical domain to optical domain a transmit set of data (TS) into a transmit optical signal (TOS) and for transmitting said transmit optical signal (TOS).

4. An optical node (ON1) according to claims 2 and 3, wherein the electronic layer (EL) provides the transmit set of data (TS) to the transmitter (TX).

5. An optical node (ON1) according to claim 3, wherein the transmitter (TX) is adapted to fast tune on a carrier wavelength for transmitting the transmit optical signal (TOS) through said carrier wavelength.

6. An optical node (ON1) according to any of the claims 1 to 5, wherein the first optical frontend (OF1) is adapted to fast tune on a carrier wavelength for receiving the first optical signal (OS1) conveyed through said carrier wavelength.

7. An optical node (ON1) according to any of the claims 1 to 6, wherein the first optical frontend (OF1) is adapted to receive the first optical signal (OS1) being conveyed on a first carrier wavelength (L1), and wherein the second optical frontend (OF2) is adapted to receive the second optical signal (OS2) being conveyed on a second carrier wavelength (L2).

8. An optical node (ON1) according to claim 7, wherein the first carrier wavelength (L1) and the second carrier wavelength (L2) are different carrier wavelengths, and the first optical frontend (OF1) and the second optical frontend (OF2) respectively receive the first optical signal (OS1) and the second optical signal (OS2) on an optical waveguide (OL5).

9. An optical node (ON1) according to claim 7, wherein the first carrier wavelength (L1) and the second carrier wavelength (L2) are the same carrier wavelength, and wherein the first optical frontend (OF1) receives the first optical signal (OS1) on an optical waveguide and the second optical frontend (OF2) receives the second optical signal (OS2) on another optical waveguide.

10. An optical node (ON1) according to any of the claims 1 to 9, wherein said optical node (ON1) is comprised in an optical slot switched network (OR), the first optical signal (OS1) being time slotted according to a first time slot structure (TS1), the second optical signal (OS2) being time slotted according to a second time slot structure (TS2).

11. An optical node (ON1) according to claim 10, wherein a time slot from the first time slot structure (TS1) and a time slot from the second time slot structure (TS2) are overlapping, and wherein the storage device (MM) and the processing device (PU) are adapted for cooperating for extracting the first set of data (IS1) and the second set of data (IS2) in a duration comprised in the union (UD) of the duration of the time slot from the first time slot structure (TS1) and the duration of the time slot from the second time slot structure (TS2).

12. An optical node (ON1) according to any of the claims 10 to 11 wherein the first optical signal (OS1) is conveyed through a first carrier wavelength (L1) in a time slot from the first time slot structure (TS1) and is conveyed through a second carrier wavelength (L2) in another time slot from the first time slot structure (TS1).

13. A method for receiving simultaneously a first optical signal (OS1) conveying a first set of data (IS1) and a second optical signal (OS2) conveying a second set of data (IS2), the first of data (IS1) and the second set of data (IS2) being respectively informative data, said method comprising the following steps performed by an optical node (ON1):
- receiving the first optical signal (OS1) by a first optical frontend (OF1) comprised in the optical node (ON1),
- converting by the first optical frontend (OF1) from optical domain to electrical domain, the received first optical signal (OS1) into a first raw electrical signal (RS1),
- receiving the second optical signal (OS2) by a second optical frontend (OF2) comprised in the optical node (ON1),
- converting by the second optical frontend (OF2) from optical domain to electrical domain the received second optical signal (OS2) into a second raw electrical signal (RS2),
- storing simultaneously the first raw electrical signal (RS1) and the second raw electrical signal (RS2) by a storage device (MM) comprised in the optical node (ON1) and connected to the first optical frontend (OF1) and to the second optical frontend (OF2),
- providing by the storage device (MM) the first raw electrical signal (RS1) to a processing device (PU) comprised in the optical node (ON1) and connected to the storage device (MM), and extracting by said processing device (PU) the first set of data (IS1) from said first raw electrical signal (RS1), and,
- providing by the storage device (MM) the second raw electrical signal (RS2) to the processing device (PU), and extracting by said processing device (PU) the second set of data (IS2) from said second raw electrical signal (RS2).

## Patentansprüche

1. Ein optischer Node (optischer Netzknoten, ON1) für den gleichzeitigen Empfang eines ersten optischen Signals (OS1), welches einen ersten Datensatz (IS1) übermittelt, und eines zweiten optischen Signals (OS2), welches einen zweiten Datensatz (IS2) übermittelt, wobei der erste Datensatz (IS1) und der zweite Datensatz (IS2) jeweils aus informativen Daten besteht; dabei weist der optische Node (ON1) auf:
- ein erstes optisches Frontend (OF1) für den Empfang des ersten optischen Signals (OS1) und für die Umwandlung dieses ersten optischen Signals (OS1) - aus der optischen Domäne in die elektrische Domäne - in ein erstes elektrisches Rohsignal (RS1),
- ein zweites optisches Frontend (OF2) für den Empfang des zweiten optischen Signals (OS2) und für die Umwandlung dieses zweiten optischen Signals (OS2) - aus der optischen Domäne in die elektrische Domäne - in ein zweites elektrisches Rohsignal (RS2),
- ein Speichergerät (MM), das mit dem ersten optischen Frontend (OF1) und dem zweiten optischen Frontend (OF2) verbunden und so angepasst ist, dass es gleichzeitig das erste elektrische Rohsignal (RS1) und das zweite elektrische Rohsignal (RS2) speichern kann,
- ein Verarbeitungsgerät (PU), das mit dem Speichergerät (MM) verbunden ist und sequenziell das gespeicherte erste elektrische Rohsignal (RS1) für die Extraktion des ersten Datensatzes (IS1), sowie das gespeicherte zweite elektrische Rohsignal (RS2) für die Extraktion des zweiten Datensatzes (IS2) erhält.

2. Ein optischer Node (ON1) nach Anspruch 1, der außerdem eine elektronische Schicht (EL) aufweist, welche sequenziell den ersten Datensatz (IS1) und den zweiten Datensatz (IS2) aufnehmen kann.

3. Ein optischer Node (ON1) nach Anspruch 1, der außerdem einen optischen Sender (TX) für die Umwandlung eines Sendedatensatzes (TS) - aus der elektrischen Domäne in die optische Domäne - in ein optisches Sendesignal (TOS) und für die Übermittlung dieses optischen Sendesignals (TOS) aufweist.

4. Ein optischer Node (ON1) nach Anspruch 2 und 3, wobei der Sender (TX) den Sendedatensatz (TS) über die elektronische Schicht (EL) erhält.

5. Ein optischer Node (ON1) nach Anspruch 3, wobei der Sender (TX) für die Schnellabstimmung auf eine Trägerwellenlänge ausgelegt ist, damit das optische Sendesignal (TOS) über diese Trägerwellenlänge übermittelt werden kann.

6. Ein optischer Node (ON1) nach einem der Ansprüche 1 bis 5, wobei das erste optische Frontend (OF1) für die Schnellabstimmung auf eine Trägerwellenlänge ausgelegt ist, damit das über diese Trägerwellenlänge übermittelte erste optische Signal (OS1) empfangen werden kann.

7. Ein optischer Node (ON1) nach einem der Ansprüche 1 bis 6, wobei das erste optische Frontend (OF1) so angepasst ist, dass es das über eine erste Trägerwellenlänge (L1) übermittelte erste optische Signal (OS1) empfangen kann, und wobei das zweite optische Frontend (OF2) so angepasst ist, dass es das über eine zweite Trägerwellenlänge (L2) übermittelte zweite optische Signal (OS2) empfangen kann.

8. Ein optischer Node (ON1) nach Anspruch 7, wobei es sich bei der ersten Trägerwellenlänge (L1) und der zweiten Trägerwellenlänge (L2) um unterschiedliche Trägerwellenlängen handelt und das erste optische Frontend (OF1) und das zweite optische Frontend (OF2) jeweils das erste optische Signal (OS1) bzw. das zweite optische Signal (OS2) auf einem optischen Wellenleiter (OL5) empfangen.

9. Ein optischer Node (ON1) nach Anspruch 7, wobei es sich bei der ersten Trägerwellenlänge (L1) und der zweiten Trägerwellenlänge (L2) um dieselbe Trägerwellenlänge handelt und wobei das erste optische Frontend (OF1) das erste optische Signal (OS1) auf einem optischen Wellenleiter empfängt und das zweite optische Frontend (OF2) das zweite optische Signal (OS2) auf einem anderen optischen Wellenleiter empfängt.

10. Ein optischer Node (ON1) nach einem der Ansprüche 1 bis 9, wobei der optische Node (ON1) aus einem optischen Slot-Switched-Netz (OR) besteht und das erste optische Signal (OS1) entsprechend einer ersten Zeitschlitzstruktur (TS1) einem Zeitschlitz (Time Slot) zugewiesen wird und das zweite optische Signal (OS2) entsprechend einer zweiten Zeitschlitzstruktur (TS2) einem Zeitschlitz zugewiesen wird.

11. Ein optischer Node (ON1) nach Anspruch 10, wobei sich ein Zeitschlitz aus der ersten Zeitschlitzstruktur (TS1) und ein Zeitschlitz aus der zweiten Zeitschlitzstruktur (TS2) überschneiden und wobei das Speichergerät (MM) und das Verarbeitungsgerät (PU) so angepasst wurden, dass sie bei der Extraktion des ersten Datensatzes (IS1) und des zweiten Datensatzes (IS2) während einer Zeitdauer kooperieren, die in der Kombination (UD) der Dauer des Zeitschlitzes der ersten Zeitschlitzstruktur (TS1) und der Dauer des Zeitschlitzes der zweiten Zeitschlitzstruktur (TS2) enthalten ist.

12. Ein optischer Node (ON1) nach einem der Ansprüche 10 bis 11, wobei das erste optische Signal (OS1) über eine erste Trägerwellenlänge (L1) in einem Zeitschlitz aus der ersten Zeitschlitzstruktur (TS1) übermittelt wird und über eine zweite Trägerwellenlänge (L2) in einem weiteren Zeitschlitz aus der ersten Zeitschlitzstruktur (TS1) übermittelt wird.

13. Ein Verfahren für den gleichzeitigen Empfang eines ersten optischen Signals (OS1), das einen ersten Datensatz (IS1) übermittelt, und eines zweiten optischen Signals (OS2), das einen zweiten Datensatz (IS2) übermittelt, wobei es sich beim ersten Datensatz (IS1) und beim zweiten Datensatz (IS2) jeweils um informative Daten handelt und wobei dieses Verfahren die folgenden von einem optischen Node (ON1) ausgeführten Schritte umfasst:
- Empfang des ersten optischen Signals (OS1) durch ein erstes optisches Frontend (OF1), das im optischen Node (ON1) enthalten ist,
- Umwandlung des empfangenen ersten optischen Signals (OS1) durch das erste optische Frontend (OF1) aus der optischen Domäne in die elektrische Domäne in ein erstes elektrisches Rohsignal (RS1),
- Empfang des zweiten optischen Signals (OS2) durch ein zweites optisches Frontend (OF2), das im optischen Node (ON1) enthalten ist,
- Umwandlung des empfangenen zweiten optischen Signals (OS2) durch das zweite optische Frontend (OF2) aus der optischen Domäne in die elektrische Domäne in ein zweites elektrisches Rohsignal (RS2),
- gleichzeitige Speicherung des ersten elektrischen Rohsignals (RS1) und des zweiten elektronischen Rohsignals (RS2) durch ein Speichergerät (MM), das im optischen Node (ON1) enthalten und mit dem ersten optischen Frontend (OF1) und dem zweiten optischen Frontend (OF2) verbunden ist,
- Bereitstellung des ersten elektrischen Rohsignals (RS1) durch das Speichergerät (MM) für ein Verarbeitungsgerät (PU), das im optischen Node (ON1) enthalten und mit dem Speichergerät (MM) verbunden ist, und Extraktion des ersten Datensatzes (IS1) durch das Verarbeitungsgerät (PU) aus dem ersten elektrischen Rohsignal (RS1), und
- Bereitstellung des zweiten elektrischen Rohsignals (RS2) durch das Speichergerät (MM) für das Verarbeitungsgerät (PU) und Extraktion des zweiten Datensatzes (IS2) durch das Verarbeitungsgerät (PU) aus dem zweiten elektrischen Rohsignal (RS2).

## Revendications

1. Nœud optique (ON1) pour la réception simultanée d'un premier signal optique (OS1) transportant un premier ensemble de données (IS1) et un deuxième signal optique (OS2) transportant un deuxième ensemble de données (IS2), le premier ensemble de données (IS1) et le deuxième ensemble de données (IS2) étant respectivement des données d'information, le nœud optique (ON1) comprenant :
une première interface avant (OF1) pour la réception du premier signal optique (OS1) et pour la conversion, du domaine optique vers le domaine électrique, dudit premier signal optique (OS1) en un premier signal brut électrique (RS1),
une deuxième interface avant (OF2) pour la réception du deuxième signal optique (OS2) et pour la conversion, du domaine optique vers le domaine électrique, dudit deuxième signal optique (OS2) en un deuxième signal brut électrique(RS2),
un dispositif de stockage (MM) connecté à la première interface avant (OF1) et à la deuxième interface avant (OF2), adapté pour stocker de manière simultanée le premier signal brut électrique (RS1) et le deuxième signal brut électrique (RS2),
un dispositif de traitement (PU) connecté au dispositif de stockage (MM), le dispositif de traitement étant alimenté de manière séquentielle en premier signal brut électrique stocké (RS1) pour l'extraction du premier ensemble de données (IS1), et en deuxième signal brut électrique stocké (RS2) pour l'extraction du deuxième ensemble de données (IS2).

2. Nœud optique (ON1) selon la revendication 1, comprenant en outre une couche d'électronique (EL) destinée à recevoir l'alimentation, de manière séquentielle, du premier ensemble de données (131) et du deuxième ensemble de données (132).

3. Nœud optique (ON1) selon la revendication 1, comprenant en outre un transmetteur optique (TX) pour la conversion, du domaine électrique vers le domaine optique, d'un ensemble de données de transmission (TS) en un signal de transmission optique (TOS) et pour la transmission dudit signal optique (TOS).

4. Nœud optique (ON1) selon la revendication 2 et la revendication 3, selon lequel la couche d'électronique (EL) fournit l'ensemble de données de transmission (TS) au transmetteur (TX).

5. Nœud optique (ON1) selon la revendication 3, selon lequel le transmetteur (TX) est adapté pour s'accorder rapidement sur une longueur d'onde porteuse pour la transmission du signal optique de transmission (TOS) via ladite longueur d'onde porteuse.

6. Nœud optique (ON1) selon l'une quelconque des revendications 1 à 5, selon lequel la première interface optique avant (OF1) est adaptée pour s'accorder rapidement sur une longueur d'onde porteuse pour la réception du premier signal optique (OS1) transporté via ladite longueur d'onde porteuse.

7. Nœud optique (ON1) selon l'une quelconque des revendications 1 à 6, selon lequel la première interface optique avant (OF1) est adaptée à recevoir le premier signal optique (OS1) transporté sur une première longueur d'onde porteuse (L1), et selon lequel la deuxième interface optique avant (OF2) est adaptée à recevoir le deuxième signal optique (OS2) transporté via une deuxième longueur d'onde porteuse (L2).

8. Nœud optique (ON1) selon la revendication 7, selon lequel la première longueur d'onde porteuse (L1) et la deuxième longueur d'onde porteuse (L2) sont des longueurs d'onde porteuses différentes, et la première interface optique avant (OF1) et la deuxième interface optique avant (OF2) reçoivent respectivement le premier signal optique (OS1) et le deuxième signal optique (OS2) sur un guide d'onde optique (OL5).

9. Nœud optique (ON1) selon la revendication 7, selon lequel la première longueur d'onde porteuse (L1) et la deuxième longueur d'onde porteuse (L2) sont la même longueur d'onde porteuse, et selon lequel la première interface optique avant (OF1) reçoit le premier signal optique (OS1) sur un guide d'onde optique et la deuxième interface optique avant (OF2) reçoit le deuxième signal optique (OS2) sur un autre guide d'onde optique.

10. Nœud optique (ON1) selon l'une quelconque des revendications 1 à 9, selon lequel ledit nœud optique (ON1) est compris dans un réseau optique à commutation de créneaux (OR), le premier signal optique (OS1) étant commuté par intervalles de temps selon une première structure à commutation de créneaux par intervalles de temps (TS1), le deuxième signal optique (OS2) étant commuté par intervalles de temps selon une deuxième structure à commutation de créneaux par intervalles de temps (TS2).

11. Nœud optique (ON1) selon la revendication 10, selon lequel un créneau d'intervalle de temps en provenance de la première structure à commutation de créneaux par intervalles de temps (TS1) et un intervalle de temps en provenance de la deuxième structure à commutation de créneaux par intervalles de temps (TS2) se chevauchent, et selon lequel le dispositif de stockage (MM) et le dispositif de traitement (PU) sont adaptés pour coopérer à l'extraction du premier ensemble de données (IS1) et du deuxième ensemble de données (IS2) dans un laps de temps compris dans l'union (UD) de la durée du créneau à intervalle de temps provenant de la première structure à commutation de créneaux par intervalles de temps (TS1) et la durée du créneau à intervalle de temps provenant de la deuxième structure à commutation de créneaux par intervalles de temps (TS2).

12. Nœud optique (ON1) selon l'une quelconque des revendications 10 à 11, selon lequel le premier signal optique (OS1) est transporté via une première longueur d'onde porteuse (L1) dans un créneau de temps en provenance de la première structure à commutation de créneaux par intervalles de temps (TS1) et est transporté via une deuxième longueur d'onde porteuse (L2) dans un autre créneau de temps provenant de la première structure à commutation de créneaux par intervalles de temps (TS1).

13. Procédé de réception simultanée d'un premier signal optique (OS 1) transportant un premier ensemble de données (IS1) et d'un deuxième signal optique (OS2) transportant un deuxième ensemble de données (IS2), le premier ensemble de données (IS1) et le deuxième ensemble de données (IS2) constituant respectivement des données informationnelles, ledit procédé comprenant les étapes suivantes mis en œuvre au niveau d'un nœud optique (ON1):
la réception du premier signal optique (OS1) par le biais d'une première interface optique avant (OF1) comprise dans le nœud optique (ON1),
la conversion par le biais de la première interface optique avant (OF1), du domaine optique vers le domaine électrique, du premier signal optique reçu (OS1) en un premier signal brut électrique (RS1),
la réception du deuxième signal optique (OS2) par le biais d'une deuxième interface optique avant (OF2) comprises dans le nœud optique (ON1),
la conversion par le biais de la deuxième interface optique avant (OF2), du domaine optique vers le domaine électrique, du deuxième signal optique reçu (OS2) en un deuxième signal brut électrique (RS2),
le stockage simultané du premier signal brut électrique (RS1) et du deuxième signal brut électrique (RS2) par le biais d'un dispositif de stockage (MM) compris dans le nœud optique (ON1) et connecté à la première interface optique avant (OF1) et à la deuxième interface optique avant (OF2),
l'alimentation, via le dispositif de stockage (MM), en premier signal brut électrique (RS1) à un dispositif de traitement (PU) compris dans le nœud optique (ON1) et connecté au dispositif de stockage (MM), et l'extraction par le biais dudit dispositif de traitement (PU) du premier ensemble de données (IS1) à partir dudit premier signal brut électrique (RS1), et,
l'alimentation, via le dispositif de stockage (MM), en deuxième signal brut électrique (RS2) au dispositif de traitement (PU), et l'extraction par le biais dudit dispositif de traitement (PU) du deuxième ensemble de données (IS2) à partir dudit deuxième signal brut électrique (RS2).
